(19) Europäisches Patentamt
European Patent Office
Office européen des brevets

(11) **EP 3 025 959 B1**

(12) **FASCICULE DE BREVET EUROPEEN**

(45) Date de publication et mention
de la délivrance du brevet:
**14.06.2017 Bulletin 2017/24**

(51) Int Cl.:
***B64C 27/51*** (2006.01)    ***B64C 27/82*** (2006.01)
***F16F 15/14*** (2006.01)

(21) Numéro de dépôt: **15195226.4**

(22) Date de dépôt: **18.11.2015**

(54) **ROTOR ARRIERE DE GIRAVION, GIRAVION EQUIPE D'UN TEL ROTOR ARRIERE ET PROCEDE D'EQUILIBRAGE STATIQUE ET/OU DYNAMIQUE D'UN ROTOR ARRIERE DE GIRAVION**

HECKROTOR EINES DREHFLÜGELFLUGZEUGS, DREHFLÜGELFLUGZEUG, DAS MIT EINEM SOLCHEN HECKROTOR AUSGESTATTET IST UND STATISCHES UND/ODER DYNAMISCHES AUSWUCHTEN EINES HECKROTORS EINES DREHFLÜGELFLUGZEUGS

A ROTORCRAFT TAIL ROTOR, A ROTORCRAFT FITTED WITH SUCH A TAIL ROTOR, AND A METHOD OF STATICALLY AND/OR DYNAMICALLY BALANCING A ROTORCRAFT TAIL ROTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.11.2014 FR 1402707**

(43) Date de publication de la demande:
**01.06.2016 Bulletin 2016/22**

(73) Titulaire: **Airbus Helicopters**
**13725 Marignane Cedex (FR)**

(72) Inventeurs:
• **CERTAIN, Bernard**
**13090 AIX EN PROVENCE (FR)**
• **JOUVE, Jérémy**
**13560 SENAS (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 0 058 117    FR-A1- 2 435 391**
**FR-A1- 2 530 216    FR-A1- 2 959 484**

**Description**

La présente invention concerne un rotor arrière de giravion. En outre, le terme de giravion est utilisé dans la demande de façon à décrire tout type d'aéronef à voilure tournante tel que notamment les hélicoptères.

Un tel rotor arrière est également dans la pratique courante désigné par le terme de rotor "anticouple" puisqu'il permet d'exercer un couple pour s'opposer au mouvement de rotation en lacet produit par un rotor principal, lequel permet la sustentation et la propulsion de l'aéronef.

Ainsi, le rotor arrière d'un giravion comporte généralement un axe de rotation sensiblement horizontal et peut être indifféremment intégré ou externe au fuselage du giravion. Dans le cas où le rotor est intégré au fuselage, on le désigne alors sous le vocable de rotor arrière caréné ou de Fenestron®.

Par ailleurs, le rotor arrière peut comporter au moins deux pales agencées symétriquement autour de l'axe de rotation du rotor. Chaque pale est mobile en rotation autour d'un axe dit "de pas" pour permettre de réaliser une variation de l'angle d'incidence des pales par rapport à l'air environnant et ainsi faire varier la poussée du rotor. Une telle variation peut notamment être réalisée lorsque le pilote de l'aéronef souhaite modifier l'angle de lacet décrit par l'aéronef, ou plus simplement lorsque qu'il augmente la puissance du rotor principal et par suite la valeur du couple en lacet.

En outre, pour faire varier l'angle de pas, le pilote actionne des pédales d'un palonnier permettant d'actionner la tige d'une servocommande de rotor arrière connectée hydrauliquement à un plateau de commande. Ce plateau de commande est quant à lui mobile en translation selon une direction parallèle à l'axe de rotation du rotor. La manoeuvre des pédales, d'une butée à l'autre, fait varier le pas des pales du rotor anticouple, par l'intermédiaire de chaque bielle reliant ledit plateau à chaque pale, selon un angle qui peut être par exemple compris entre - 8° et + 23° autour d'une position à plat de 0°.

En vol, dès que la poussée du rotor n'est plus nulle, c'est-à-dire que l'angle de pas est différent de 0°, un couple de rappel à plat des pales s'exerce sur les pales et tend à ramener l'angle de pas à 0°. En effet, lorsqu'un rotor est en rotation, les forces centrifuges agissant sur chaque élément de pale ont pour effet de s'opposer à toute variation du pas et de ramener les pales dans le plan de rotation. Pour calculer le couple résultant M s'exerçant sur les pales, on peut se référer à la littérature connue à ce sujet, et par exemple, on peut considérer un élément de masse dm de la pale, situé à une distance r' du centre du rotor. Alors, la force centrifuge agissant sur cet élément a pour valeur :

$$dF \ = \ \Omega^2 . r' . dm$$

où $\Omega$ est la vitesse angulaire du rotor.

Cette force élémentaire peut alors se décomposer en une composante $dF_z$ parallèle à l'axe de pas et une composante $dF_1$ perpendiculaire à l'axe de pas. La composante $dF_1$ a alors pour valeur :

$$dF1 \ = \ dF . sin_\varphi \ = \ \Omega^2 . r' sin_\varphi . dm \ = \ \Omega^2 . x . dm$$

où x est la distance séparant l'élément de pale considéré à l'axe de pas.

La composante $dF_1$ est alors située à une distance y du plan pour lequel l'angle de pas général $\theta$ est nul, engendrant ainsi un couple élémentaire dM tendant à ramener la pale à plat, c'est-à-dire dans un plan xOz.

Or si on admet que le centre de gravité G de la section de pale est situé sur l'axe de pas, la valeur de ce couple élémentaire est donnée par l'expression :

$$dM \ = \ \Omega^2 . x . y . dm$$

et le couple résultant M s'écrit :

$$M \ = \ \Omega^2 . \int_{-C1}^{C2} x . y . dm$$

avec C1 et C2 correspondant respectivement aux projections orthogonales sur un axe Ox d'un bord d'attaque de la section de pale au point G et d'un bord de fuite de la section de pale au point G.

Avec l'assistance hydraulique, et plus particulièrement grâce à la servocommande, on peut contrer cet effet de "rappel à plat" du rotor et ainsi annuler la réversibilité de la commande. Cependant, en cas de défaillance de cette assistance hydraulique, qui peut par exemple émaner d'une fuite dans le circuit hydraulique ou encore d'une panne d'une pompe hydraulique, l'effort nécessaire pour manoeuvrer les pédales devient brusquement très important.

Pour cette raison, il a été installé, en parallèle à la servocommande arrière, un dispositif hydraulique additionnel de sécurité, appelé "compensateur d'efforts" en lacet, qui permet de délester la majeure partie de la force de rétroaction aérodynamique générée par le rotor de queue. Un tel compensateur d'efforts permet en effet de générer une force s'opposant à la force de rappel à plat s'exerçant sur les pales. Ce compensateur d'efforts comporte ainsi un accumulateur de pression hydraulique indépendant du circuit principal hydraulique d'assistance et un levier de commande visant à démultiplier la course de déplacement d'un piston de vérin connecté hydrauliquement à l'accumulateur de pression pour créer un "ressort à pente négative".

Cependant, un tel compensateur d'efforts intègre également de nombreux organes hydrauliques qui peuvent eux aussi subir une avarie. Une fuite dans le compensateur d'efforts empêcherait alors de produire la force nécessaire pour s'opposer à la force de rappel à plat.

Il pourrait ainsi en résulter un blocage du système de commande de variation du pas du rotor arrière. En effet, en cas de disfonctionnement simultané de l'assistance hydraulique et du compensateur d'efforts, les efforts nécessaires pour permettre au pilote de modifier le pas des pales du rotor arrière sont alors trop importants et l'empêche de manoeuvrer le pas des pales du rotor arrière avec ses pédales.

Ainsi, un premier objectif de l'invention est de limiter les causes possibles du blocage de la commande de l'angle de pas d'un rotor arrière et donc d'améliorer la sécurité des giravions.

De plus, avec des moteurs d'aéronefs de plus en plus puissants, il a fallu augmenter la surface des pales du rotor arrière, par exemple par l'ajout de "tabs" en bord de fuite de chaque pale. En fait, il s'agit d'un ajout en bord de fuite d'éléments de quelques centimètres en corde s'étendant sur une partie longitudinale de l'envergure. Cette augmentation de la surface des pales a alors engendrée une augmentation importante des efforts statiques et dynamiques transmis par les pales à une tête de rotor.

Pour réduire ces efforts, on a alors équipé les pieds de chacune des pales avec deux masses de compensation émergeant symétriquement sensiblement perpendiculairement à un axe principal d'inertie de chaque pale ou plus simplement au plan médian longitudinal défini par chaque pale. Ces masses de compensation permettent en effet de créer un moment opposé au moment de rappel à plat des pales et réduise alors les efforts de commande de l'angle de pas. On stabilise ainsi chaque élément de pale quelque soit l'angle de pas du rotor.

De telles masses de compensation sont plus généralement désignées par le terme de "masses chinoises" en langue française ou par le terme anglais de "chinese weight". Elles forment alors, avec chaque pale un ensemble monolithique rigide et sont notamment décrites par le demandeur dans le document FR 2 719 554. En effet, un tel document décrit les masses de compensation comme étant des éléments fixes formant protubérance de part et d'autre d'un plan médian longitudinal de pale.

Cependant, si de telles masses chinoises permettent de limiter les efforts statiques, elles ne permettent pas de réduire les efforts dynamiques transmis par les pales à une tête de rotor. De telles contraintes peuvent alors conduire à réduire la durée de vie de la liaison pivot entre chaque pale et un corps de moyeu. Une telle liaison pivot est en effet formée par des éléments constituant l'articulation de pas, formée par des paliers lamifiés. Ces paliers sont formés par une combinaison d'élastomère et de métal, et présentent généralement une forme cylindrique ou bien encore conique. En outre, ils sont le siège de sollicitations mécaniques importantes lors de la rotation du rotor arrière, et plus particulièrement lors des phases de variation de l'angle de pas des pales.

Il en résulte alors une réduction des intervalles de maintenance de l'aéronef pour permettre notamment le remplacement des organes d'usure reprenant ces efforts. Or, une réduction des intervalles de maintenance engendre indubitablement une augmentation du coût d'exploitation de ces aéronefs, ce qui est commercialement à éviter.

Outre des masses chinoises immobiles par rapport aux pieds des pales d'un rotor arrière, il est également connu d'équiper un rotor principal de giravion avec des pendules ou des masses battantes mobiles en rotation par rapport aux pieds des pales. De tels agencements sont notamment décrits par les documents FR 2 530 216, FR 2 435 391 et FR 2 959 484 mais ils ne permettent pas de garantir une réduction optimale des efforts statiques et dynamiques générés par la rotation d'un rotor arrière.

En effet, l'excroissance décrite dans le document FR 2 530 216 est formée par le boîtier de l'axe 6 et est donc creuse. Un tel boîtier ne joue alors pas le rôle de masse chinoise comme une protubérance pleine. En outre, la direction de la liaison pivot entre le pendule et le boîtier est perpendiculaire à la direction d'émergence du boîtier par rapport à l'axe principal d'inertie de l'élément de pale. Un tel agencement n'est donc pas adapté pour réduire des efforts statiques et dynamiques générés par la rotation d'un rotor arrière.

Dans le document FR 2 435 391, il y est décrit un rotor principal de giravion muni de masses battantes par rapport à un élément de pales. Cependant, n'y a pas à proprement parlé de protubérance émergeant perpendiculairement à un axe principal d'inertie d'un élément de pale. Les masses battantes sont donc dans ce cas directement positionnées de par et d'autre de l'élément de pale sans être éloignées d'un axe principale d'inertie. Un tel agencement n'est donc également pas adapté pour réduire simplement et de façon optimale les efforts statiques et dynamiques générés par la rotation d'un rotor arrière.

Le document EP 0 058 117 décrit quant à lui une suspension d'une boîte de transmission pour un hélicoptère avec des masses battantes connectées au fuselage par des portions déformables mais n'est pas transposable à un rotor arrière de giravion pour réduire des efforts statiques et dynamiques générés par la rotation de ce rotor arrière.

En outre, selon une autre alternative permettant de limiter les sollicitations dans les paliers lamifiés, il est également possible de limiter la puissance des moteurs, et donc la vitesse des aéronefs, ce qui est également préjudiciable d'un point de vue commercial. Cependant, une telle solution n'est que palliative et ne permet en aucun cas de résoudre le problème à sa source.

La présente invention a alors pour second objectif de proposer un rotor permettant de s'affranchir des limitations mentionnées ci-dessus, et notamment permettant de réduire significativement les efforts statiques et dynamiques générés par la rotation du rotor arrière. Ainsi, la conception structurelle du rotor arrière selon l'invention permet de limiter, voire d'annuler, les sollicitations mécaniques transmises aux paliers lamifiés et aux bielles de commande de pas et toute la chaine cinématique, et ceci, tout en utilisant le ou les moteur(s) à leur puissance maximale.

Par ailleurs, tel que décrit dans le document EP 0 773 881, on connait également des rotors arrière dans lesquels un mécanisme gyroscopique permet de faire varier la poussée automatiquement. Il est ainsi possible de stabiliser le couple de lacet de l'hélicoptère en vol.

Cependant, une telle solution est mécaniquement complexe à réaliser et génère alors des coûts de fabrication et/ou d'adaptation importants par rapport aux solutions actuelles comportant des masses chinoises, une assistance hydraulique par servocommande et un compensateur d'efforts.

Ainsi, un troisième objectif de l'invention est de proposer une solution sûre, simple techniquement et peu couteuse permettant de limiter les efforts dans les commandes tout en conservant la structure des rotors arrière d'ores et déjà commercialisés. L'invention permet, en effet, à faible coût, de réaménager (également désigné par le terme anglais de "retrofit") des aéronefs existants avec un rotor arrière plus performant.

L'invention concerne donc un rotor arrière de giravion comportant au moins deux éléments de pale, chaque élément de pale étant apte à pivoter autour d'un axe Z de variation de pas collectif pour faire varier le pas collectif de chaque élément de pale du rotor arrière, chaque élément de pale comportant au moins une masse de compensation comportant une protubérance émergeant selon un axe transversal Y sensiblement perpendiculairement à un axe principal d'inertie de l'élément de pale, l'axe principal d'inertie étant parallèle à l'axe Z.

Ce rotor est remarquable en ce que la masse de compensation comporte une portion déformable, mobile par rapport à la protubérance dans un plan perpendiculaire à l'axe transversal Y

Autrement dit, une telle masse de compensation ne forme pas, avec l'élément de pale, un ensemble monolithique rigide et fixe contrairement aux masses de compensation décrites dans l'art antérieur. En fonction des efforts qui lui sont appliqués, la portion déformable de la masse de compensation est ainsi libre de se déplacer selon un mouvement plan parallèlement à l'axe principal d'inertie de l'élément de pale. Un tel axe d'inertie peut, par exemple, s'inscrire dans un plan médian longitudinal de symétrie de la pale lorsque celle-ci présente un profil symétrique entre son extrados et son intrados.

Avantageusement, la portion déformable peut comporter une masselotte au moins partiellement mobile en rotation autour de l'axe transversal Y.

En d'autres termes, la masselotte est libre de pivoter autour d'un axe perpendiculaire à l'axe principal d'inertie de l'élément de pale et décrit ainsi un arc de cercle dans un plan perpendiculaire à l'axe transversal Y.

Par ailleurs, différentes variantes de l'invention peuvent être réalisées avec des portions déformables de différentes natures décrites ci-après.

Ainsi, selon un premier mode de réalisation, la portion déformable peut comporter une lame flexible.

Une telle lame flexible comporte donc une direction privilégiée de déformation en flexion entre une position de repos dans laquelle la lame flexible est sensiblement plane et une position de déformation dans laquelle l'une des extrémités de la lame flexible est éloignée du plan relatif à sa position de repos.

Avantageusement, la lame flexible peut émerger de la protubérance selon une direction radiale par rapport à l'axe de rotation du rotor.

En pratique, la lame flexible peut comporter :

- une première extrémité solidarisée avec la protubérance par une première liaison de type encastrement, et ;
- une seconde extrémité solidarisée avec la masselotte par une seconde liaison de type encastrement.

Autrement dit, dans ce cas, la portion déformable est formée uniquement par la lame flexible apte à se déformer dans le plan parallèle à l'axe principal d'inertie de la pale. Il n'est donc pas nécessaire de lubrifier, ou plus simplement, d'entretenir une telle portion déformable puisqu'elle n'est le siège d'aucun frottement.

Selon un second mode de réalisation, la portion déformable peut comporter un bras rigide.

Dans cette variante, le bras rigide se déplace dans le plan parallèle à l'axe principal d'inertie sans se déformer en tant que tel. C'est la liaison avec la protubérance qui permet d'obtenir la déformation plane de la portion déformable.

Dans ce cas particulier, le bras rigide peut alors comporter :

- une première extrémité assujettie en liaison pivot avec la protubérance, et ;
- une seconde extrémité solidarisée avec la masselotte par une liaison de type encastrement.

En d'autres termes, dans ce cas, la déformation de la portion déformable est obtenue par l'articulation entre le bras rigide et la protubérance. La masselotte décrit ainsi un mouvement de rotation autour de l'axe de la liaison pivot avec la protubérance.

Selon un mode de réalisation particulier, la portion déformable peut comporter une longueur comprise entre 0,05 et 0,09 mètre.

Une telle valeur pour la longueur de la portion déformable correspond sensiblement à la distance entre l'axe de rotation du rotor et le point d'attache de la portion déformable. Cette valeur de la longueur est en effet optimale afin de limiter les efforts transmis aux bielles de commande de pas et permet donc de limiter le couple de retour à plat du rotor.

Avantageusement, la masselotte peut comporter une masse comprise entre 100 et 200 grammes.

Une telle masse permet en effet de garantir un compromis d'équilibrage idéal entre la réduction des efforts dynamiques transmis par les pales et l'augmentation de la masse tournante, due à l'adjonction d'une masse de compensation, et, par suite, l'augmentation de la force centrifuge à laquelle est soumis le rotor. En outre, une telle masse correspond sensiblement à la moitié de la masse d'une masse chinoise non déformable généralement utilisée, conformément à l'art antérieur.

La présente invention a aussi pour objet un giravion remarquable en ce qu'il comporte un rotor arrière tel que précédemment décrit.

En effet, comme déjà explicité ci-dessus, un giravion équipé de ce type de rotor est plus sûr et plus rapide tout en conservant des intervalles de maintenance acceptables pour son exploitation commerciale.

Enfin, l'invention concerne également un procédé d'équilibrage statique et/ou dynamique d'un rotor arrière de giravion. En outre, un tel rotor arrière comporte au moins deux éléments de pale, chaque élément de pale comportant au moins une masse de compensation comportant une protubérance émergeant selon un axe transversal Y sensiblement perpendiculairement à un axe principal d'inertie de l'élément de pale, cet axe principal d'inertie étant parallèle à un axe Z de variation d'un pas collectif pour faire varier ledit pas collectif de chaque élément de pale dudit rotor arrière.

Selon l'invention, un tel procédé est remarquable en ce qu'il comporte une étape consistant à équiper la masse de compensation avec une portion déformable mobile par rapport à la protubérance dans un plan parallèle à l'axe principal d'inertie de l'élément de pale.

Autrement dit, on équilibre en régime statique et/ou dynamique un rotor arrière de giravion en utilisant une masse de compensation qui comporte une portion déformable. Comme déjà indiqué ci-dessus, une telle portion déformable peut se présenter sous différentes formes telles une lame flexible ou encore comporter un bras rigide et une articulation formant une liaison pivot avec la protubérance.

Avantageusement, la portion déformable peut comporter une masselotte au moins partiellement mobile en rotation autour d'un axe de rotation sensiblement perpendiculaire à l'axe principal d'inertie de l'élément de pale. Ainsi, on peut adapter la position, la forme et la masse de la masselotte en fonction de la fréquence des vibrations que l'on souhaite atténuer qui est généralement celle correspondant au régime de rotation du rotor arrière.

En d'autres termes, un simple remplacement des masselottes permet de réaliser rapidement l'équilibrage statique et/ou dynamique d'un rotor. De plus, on peut utiliser la même structure de masse de compensation pour équilibrer des rotors comportant différentes pales en forme et/ou en nombre. Un tel procédé permet ainsi de mutualiser les pièces utilisées pour la conception de différents rotors arrière, et par suite, de réduire les coûts de fabrication de ces rotors.

En pratique, on peut aussi adapter la longueur de la portion déformable en fonction de la fréquence des vibrations que l'on souhaite atténuer, c'est-à-dire avantageusement celle correspondant au régime de rotation du rotor arrière.

De même que précédemment, on peut réaliser rapidement l'équilibrage statique et dynamique d'un rotor en adaptant la longueur de la portion déformable. Une telle longueur correspond, par exemple, à la longueur d'une lame flexible ou encore à celle du bras rigide. Dans ce dernier cas, la longueur de la portion déformable correspond au rayon du mouvement de rotation du bras rigide.

L'invention et ses avantages apparaîtront avec plus de détails dans le cadre de la description qui suit avec des exemples donnés à titre illustratif en référence aux figures annexées qui représentent :

- la figure 1, une vue en perspective d'un élément de pale selon une première variante de masses de compensation conformes à l'invention,

- la figure 2, une vue en coupe transversale dans un premier plan yOz perpendiculaire à un plan P de déformation de la portion déformable et illustrant des masses de compensation selon une deuxième variante, conformément à l'invention, et,

- la figure 3, représente une vue en coupe transversale dans un second plan xOy perpendiculaire au plan P de déformation de la portion déformable et illustrant une masse de compensation selon la deuxième variante, conformément à l'invention.

Les éléments présents dans plusieurs figures distinctes peuvent être affectés d'une seule et même référence.

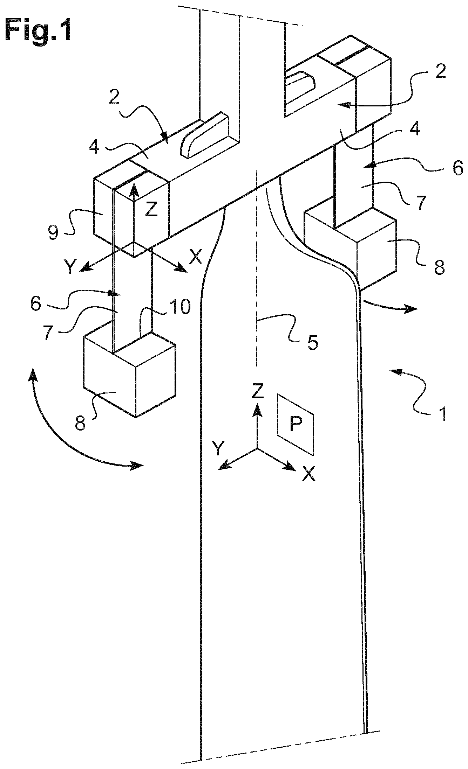

On note que trois axes X, Y et Z, orthogonaux les uns par rapport aux autres, sont représentés sur les figures 1, 2 et 3.

Telle que représentée à la figure 1, la direction selon l'axe Z est dite longitudinale dans la mesure où elle correspond à la direction dans laquelle est inscrite la dimension la plus longue d'un élément de pale 1. Ainsi, par la suite, le terme de « longueur » est relatif à une dimension longitudinale de l'élément de pale 1 du rotor selon cette direction longitudinale de l'axe Z. Par ailleurs, il résulte de la géométrie de ce rotor qu'un premier axe principal d'inertie 5 de cet élément de pale 1 est parallèle à la direction longitudinale d'axe Z.

Les deux autres directions selon les axes X et Y sont dites transversales. Les axes X et Z permettent notamment de décrire un plan P dans lequel une portion déformable d'une masse de compensation est libre de se déplacer.

Tel que représenté, chaque élément de pale 1 comporte deux masse de compensation 2 comportant chacune une protubérance 4 s'étendant respectivement de part et d'autre du plan P sensiblement perpendiculairement à l'axe principal d'inertie 5.

Dans cette variante de la figure 1, une portion déformable 6 de la masse de compensation 2 comporte une lame flexible 7 dont une première extrémité 9 est solidaire de la protubérance 4 et une deuxième extrémité 10 est solidaire d'une masselotte 8. Une telle masselotte 8 peut alors décrire un mouvement de rotation dans le plan P. Autrement dit, la masselotte 8 est assujettie en liaison pivot d'axe Y par rapport à la protubérance 4 de l'élément de pale 1.

Les masselottes permettent de produire des couples statique et dynamique de même sens autour de l'axe de pas. Ainsi, il est avantageux d'équiper les portions déformables des masses de compensation avec des butées angulaires notamment utiles à l'arrêt pour éviter des interférences avec les commandes de palonnier lors des phases de démarrage ou d'arrêt du giravion.

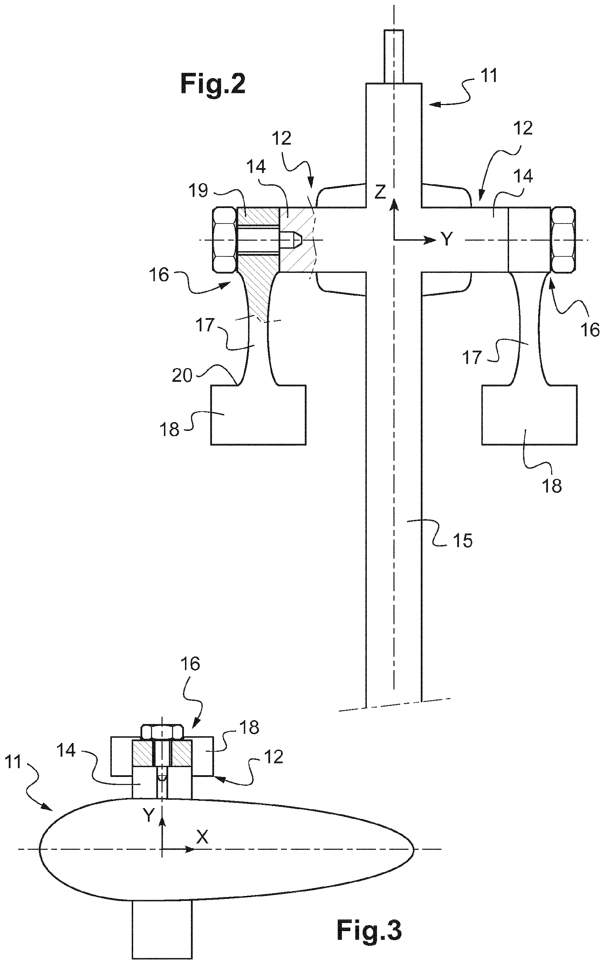

Tel que décrit à la figure 2, et selon une autre variante de l'invention, la portion déformable 16 peut présenter une autre forme et, par exemple, comporter un bras rigide 17 dont une première extrémité 19 est agencée en liaison pivot d'axe Y avec une protubérance 14 de la masse de compensation 12. Une telle liaison pivot peut notamment être réalisée au moyen d'un palier tel un roulement à billes ou un coussinet en bronze de façon à limiter les frottements.

Telles que représentées, ces protubérances 14 émergent sensiblement perpendiculairement à un axe principal d'inertie 15. Par ailleurs, un axe peut être vissé dans les protubérances 14 pour former l'axe de la liaison pivot entre le bras rigide 17 et chaque protubérance 14.

La deuxième extrémité 20 du bras rigide 17 est quant à elle solidarisée avec une masselotte 18. Telle que représentée schématiquement sur cette figure 2, une telle masselotte 18 peut former avec le bras rigide 17 un ensemble monolithique.

Cependant, selon d'autres variantes non représentées, il est également envisageable de permettre un remplacement de la masselotte 18 indépendamment du bras rigide 17. Dans ce dernier cas, des moyens de solidarisation réversible, tels que des vis ou des boulons sont utilisés pour former la liaison de type encastrement entre la masselotte 18 et le bras rigide 17.

Telle que représentée à la figure 3, seule une des protubérances 14 de l'élément de pale 11 peut être équipé d'une portion déformable 16. Selon l'invention, il est en effet possible d'adapter le nombre, la forme, la masse, la longueur et la position des portions déformables d'un élément de pale pour permettre d'atténuer des vibrations à différentes fréquences et notamment aux fréquences correspondant à celles du régime de rotation du rotor arrière.

Par exemple en utilisant une longueur de bras rigide sensiblement égale à la longueur de l'entraxe correspondant à la distance séparant l'axe de la liaison pivot du bras et l'axe de la liaison pivot de l'élément de pale, on peut atténuer certaines vibrations. Il en résulte que les efforts dans la bielle de pas de chaque élément de pale sont significativement diminués avec, par exemple, un gain de l'ordre de 30%.

De plus, avec des portions déformables appropriées, il est possible d'obtenir en régime statique un rendement deux fois supérieur à celui obtenu avec des masses chinoises classiques. Par suite, il possible de réduire la masse globale de ce rotor et les efforts dynamiques induits.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

**1.** Rotor arrière de giravion comportant au moins deux éléments de pale (1, 11), chaque élément de pale (1, 11) étant apte à pivoter autour d'un axe Z de variation d'un pas collectif pour faire varier ledit pas collectif de chaque élément de pale dudit rotor arrière, chaque élément de pale (1, 11) comportant au moins une masse de compensation (2, 12) comportant une protubérance (4, 14) émergeant selon un axe transversal Y sensiblement perpendiculairement à un axe principal d'inertie (5, 15) dudit élément de pale (1, 11), ledit axe principal d'inertie (5, 15) étant parallèle audit axe Z,
**caractérisé en ce que** ladite masse de compensation (2, 12) comporte une portion déformable (6, 16), mobile par rapport à ladite protubérance (4, 14) dans un plan P perpendiculaire audit axe transversal Y.

**2.** Rotor arrière selon la revendication 1,
**caractérisé en ce que** ladite portion déformable (6, 16) comporte une masselotte (8, 18) au moins partiellement mobile en rotation autour dudit axe transversal Y.

**3.** Rotor arrière selon l'une des revendications 1 ou 2,
**caractérisé en ce que** ladite portion déformable (6) comporte une lame flexible (7).

**4.** Rotor arrière selon la revendication 3,
**caractérisé en ce que** ladite lame flexible (7) émerge de ladite protubérance (4) selon une direction radiale par rapport à l'axe de rotation du rotor.

**5.** Rotor arrière selon l'une des revendications précédentes, **caractérisé en ce que** ladite lame flexible (7) comporte :

• une première extrémité (9) solidarisée avec ladite protubérance (4) par une première liaison de type encastrement, et ;
• une seconde extrémité (10) solidarisée avec ladite masselotte (8) par une seconde liaison de type encastrement.

**6.** Rotor arrière selon l'une des revendications 1 ou 2,
**caractérisé en ce que** ladite portion déformable (16) comporte un bras rigide (17).

**7.** Rotor arrière selon la revendication 6,
**caractérisé en ce que** ledit bras rigide (17) comporte :

• une première extrémité (19) assujettie en liaison pivot avec ladite protubérance (14), et ;
• une seconde extrémité (20) solidarisée avec ladite masselotte (18) par une liaison de type encastrement.

**8.** Rotor arrière selon l'une des revendications précédentes,
**caractérisé en ce que** ladite portion déformable (6, 16) comporte une longueur comprise entre 0,05 mètre et 0,09 mètre.

**9.** Rotor arrière selon l'une des revendications précédentes,
**caractérisé en ce que** ladite masselotte (8, 18) comporte une masse comprise entre 100 gramme et 200 gramme.

**10.** Giravion **caractérisé en ce qu'**il comporte un rotor arrière selon l'une des revendications précédentes.

**11.** Procédé d'équilibrage statique et/ou dynamique d'un rotor arrière de giravion, ledit rotor arrière comportant au moins deux éléments de pale (1, 11), chaque élément de pale (1, 11) comportant au moins une masse de compensation (2, 12) comportant une protubérance (4, 14) émergeant selon un axe transversal Y sensiblement perpendiculairement à un axe principal d'inertie (5, 15) dudit élément de pale (1, 11), ledit axe principal d'inertie (5, 15) étant parallèle à un axe Z de variation d'un pas collectif pour faire varier ledit pas collectif de chaque élément de pale dudit rotor arrière ,
**caractérisé en ce que** ledit procédé comporte une étape durant laquelle on équipe ladite masse de compensation (2, 12) avec une portion déformable (6, 16) mobile par rapport à ladite protubérance (4, 14) dans un plan P parallèle audit axe principal d'inertie (5, 15) dudit élément de pale (1, 11) et perpendiculaire audit axe transversal Y.

**Patentansprüche**

1. Heckrotor eines Drehflügelflugzeugs mit mindestens zwei Rotorblattelementen (1, 11), wobei jedes Rotorblattelement (1, 11) um eine Achse (Z) einer kollektiven Rotorblattverstellung verschwenkbar ist, um die kollektive Rotorblatstellung eines jeden Rotorblattelements des Heckrotors zu verstellen, wobei jedes Rotorblattelement (1, 11) mindestens eine Ausgleichsmasse (2, 12) aufweist mit einem Vorsprung (4, 14), der entlang einer Querachse Y im Wesentlichen senkrecht zu einer Hauptträgheitsachse (5, 15) des Rotorblattelements (1, 11) herausragt, wobei die Hauptträgheitsachse (5, 15) parallel zu der Z-Achse ist,
**dadurch gekennzeichnet, dass** die Ausgleichsmasse (2, 12) einen verformbaren Abschnitt (6, 16) aufweist, der relativ zu dem Vorsprung (4, 14) in einer zu der Querachse Y senkrechten Ebene P beweglich ist.

2. Heckrotor nach Anspruch 1,
**dadurch gekennzeichnet, dass** der verformbare Abschnitt (6, 16) ein Fliehkraftgewicht (8, 18) aufweist, das zumindest teilweise um die Querachse Y drehbeweglich ist.

3. Heckrotor nach einem der Ansprüche 1 oder 2,
**dadurch gekennzeichnet, dass** der verformbare Abschnitt (6) eine flexible Lamelle (7) aufweist.

4. Heckrotor nach Anspruch 3,
**dadurch gekennzeichnet, dass** die flexible Lamelle (7) aus dem Vorsprung (4) in einer radialen Richtung relativ zu der Drehachse des Rotors herausragt.

5. Heckrotor nach einem der vorstehenden Ansprüche,
**dadurch gekennzeichnet, dass** die flexible Lamelle (7) aufweist:

   • ein erstes Ende (9), das mit dem Vorsprung (4) mittels einer Steckverbindung verbunden ist, und
   • ein zweites Ende (10), das mit dem Fliehkraftgewicht (8) über eine zweite Steckverbindung verbunden ist.

6. Heckrotor nach einem der Ansprüche 1 oder 2,
**dadurch gekennzeichnet, dass** der verformbare Abschnitt (16) einen steifen Arm (17) aufweist.

7. Heckrotor nach Anspruch 6,
**dadurch gekennzeichnet, dass** der steife Arm (17) aufweist:

   • ein erstes Ende (19), das an dem Vorsprung (14) angelenkt ist, und
   • ein zweites Ende (20), das mit dem Fliehkraftgewicht (18) mittels einer Steckverbindung verbunden ist.

8. Heckrotor nach einem der vorstehenden Ansprüche,
**dadurch gekennzeichnet, dass** der verformbare Abschnitt eine Länge von 0,05 bis 0,09 Metern aufweist.

9. Heckrotor nach einem der vorstehenden Ansprüche,
**dadurch gekennzeichnet, dass** das Fliehkraftgewicht (8, 18) ein Gewicht von 100 Gramm bis 200 Gramm aufweist.

10. Drehflügelflugzeug,
**dadurch gekennzeichnet, dass** es einen Heckrotor nach einem der vorstehenden Ansprüche aufweist.

11. Verfahren zum statischen und/oder dynamischen Auswuchten eines Heckrotors eines Drehflügelflugzeugs, wobei der Heckrotor mindestens zwei Rotorblattelemente (1, 11) aufweist, wobei jedes Rotorblattelement (1, 11) mindestens eine Ausgleichsmasse (2, 12) aufweist mit einem Vorsprung (4, 14), der entlang einer Querachse Y im Wesentlichen senkrecht zu einer Hauptträgheitsachse (5, 15) des Rotorblattelements (1, 11) herausragt, wobei die Hauptträgheitsachse (5, 15) parallel zu einer Achse Z der Änderung einer kollektiven Rotorblattstellung verläuft, um die kollektive Rotorblattstellung eines jeden Rotorblattelements des Heckrotors zu verstellen,
**dadurch gekennzeichnet, dass** das Verfahren einen Schritt aufweist, während dem die Ausgleichsmasse (2, 12) mit einem verformbaren Abschnitt (6, 16), der bezüglich des Vorsprungs (4, 14) in einer zu der Hauptträgheitsachse (5, 15) des Rotorblattelements (1, 11) parallelen und zu der Querachse Y senkrechten Ebene P beweglich ist, versehen wird.

**EP 3 025 959 B1**

**Claims**

1. Rotorcraft tail rotor comprising at least two blade elements (1, 11), each blade element (1, 11) being able to pivot about a collective pitch variation axis Z for varying said collective pitch of each blade element of said tail rotor, each blade element (1, 11) comprising at least one compensation weight (2, 12) comprising a projection (4, 14) emerging along a transverse axis Y that is substantially perpendicular to a main inertia axis (5, 15) of said blade element (1, 11), said main inertia axis (5, 15) being parallel to said axis Z,
   **characterized in that** said compensation weight (2, 12) comprises a deformable portion (6, 16) which is movable with respect to said projection (4, 14) in a plane P that is perpendicular to said transverse axis Y.

2. Tail rotor according to claim 1,
   **characterized in that** said deformable portion (6, 16) comprises a flyweight (8, 18) which is at least partially movable in rotation about said transverse axis Y.

3. Tail rotor according to one of claims 1 or 2, **characterized in that** said deformable portion (6) comprises a flexible strip (7).

4. Tail rotor according to claim 3,
   **characterized in that** said flexible strip (7) emerges from said projection (4) in a radial direction with respect to the axis of rotation of the rotor.

5. Tail rotor according to one of the preceding claims, **characterized in that** said flexible strip (7) comprises:

   • a first end (9) secured to said projection (4) by a first connection of the plug-in type, and
   • a second end (10) secured to said flyweight (8) by a second connection of the plug-in type.

6. Tail rotor according to one of claims 1 or 2, **characterized in that** said deformable portion (16) comprises a rigid arm (17).

7. Tail rotor according to claim 6,
   **characterized in that** said rigid arm (17) comprises:

   • a first end (19) pivotably connected to said projection (14), and
   • a second end (20) secured to said flyweight (18) by a connection of the plug-in type.

8. Tail rotor according to one of the preceding claims,
   **characterized in that** said deformable portion (6, 16) has a length between 0.05 metre and 0.09 metre.

9. Tail rotor according to one of the preceding claims,
   **characterized in that** said flyweight (8, 18) has a weight between 100 grams and 200 grams.

10. Rotorcraft, **characterized in that** it comprises a tail rotor according to one of the preceding claims.

11. Method for statically and/or dynamically balancing a rotorcraft tail rotor, said tail rotor comprising at least two blade elements (1, 11), each blade element (1, 11) comprising at least one compensation weight (2, 12) comprising a projection (4, 14) emerging along a transverse axis Y that is substantially perpendicular to a main inertia axis (5, 15) of said blade element (1, 11), said main inertia axis (5, 15) being parallel to a collective pitch variation axis Z for varying said collective pitch of each blade element of said tail rotor,
   **characterized in that** said method comprises a step during which said compensation weight (2, 12) is equipped with a deformable portion (6, 16) which is movable with respect to said projection (4, 14) in a plane P that is parallel to said main inertia axis (5, 15) of said blade element (1, 11) and perpendicular to said transverse axis Y.

**Fig.1**

**Fig.2**

**Fig.3**

**EP 3 025 959 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2719554
- FR 2530216
- FR 2435391
- FR 2959484
- EP 0058117 A
- EP 0773881 A